# EUROPEAN PATENT SPECIFICATION

(11) **EP 0 294 144 B1**
(45) Date of publication and mention of the grant of the patent: **04.05.1994**
(21) Application number: 88304936.3
(22) Date of filing: 31.05.1988
(51) Int. Cl.: C08L 79/08, C08G 73/10

(54) **Polyimide resin composition**
Polyimidharz-Zusammensetzung
Composition de résine polyimide

(30) Priority: 02.06.1987 JP 137756/87; 02.06.1987 JP 137757/87; 17.12.1987 JP 317451/87
(43) Date of publication of application: 07.12.1988
(73) Proprietor: MITSUI TOATSU CHEMICALS, Inc., Chiyoda-Ku Tokyo 100 (JP)
(72) Inventor: Ohta, Masahiro, Yokohama-shi Kanagawa-ken (JP); Iiyama, Katsuaki, Odawara-shi Kanagawa-ken (JP); Kawashima, Saburo, Yokosuka-shi Kanagawa-ken (JP); Tamai, Shoji, Yokohama-shi Kanagawa-ken (JP); Oikawa, Hideaki, Yokohama-shi Kanagawa-ken (JP); Yamaguchi, Akihiro, Kamakura-shi Kanagawa-ken (JP)
(74) Representative: Hayward, Denis Edward Peter

(56) References cited:
- WO-A-83/03417
- US-A- 4 455 410
- PATENT ABSTRACTS OF JAPAN, vol. 11, no. 246 (C-439)[2693], 11th August 1987; & JP-A-62 53 388

## Description

The present invention relates to a molding resin composition, and more particularly to a molding resin composition of polyimide which is excellent in high-temperature stability, chemical resistance and mechanical strength as well as possessing good processing ability in molding.

Polyimide has so far been excellent in mechanical strength and dimensional stability in addition to having high-temperature resistance. It also has flame retardance and electrical insulation properties. Therefore polyimide has been used in the field of electrical and electronic parts, aeronautics and space instruments and transport machinery, and is also expected to be widely used in future in fields where high temperature resistance is required.

Many kinds of polyimide which exhibit outstanding properties have been developed to date. Some types of polyimide, however, have excellent high-temperature resistance but they have no definite glass transition temperature and require a sinter molding method for processing them.

On the other hand, other types of polyimide have excellent processing ability but they have low glass transition temperatures and are soluble in halogenated hydrocarbons. They are unsatisfactory from the viewpoint of high temperature stability and solvent resistance. Thus there are both merits and drawbacks in their properties.

A blend of polyetherimide and polysulfide is described in the US patent 4,455,410; The WO-A-83/03417 discloses a blend of polyetherimide and polysulfone.

Accordingly a polyimide has been desired which is excellent in high-temperature stability and solvent resistance and also has outstanding processing ability as a molding material.

In the search for a polyimide which satisfies the above mentioned requirements, the present inventors have found a polyimide consisting of recurring units of the following formula: 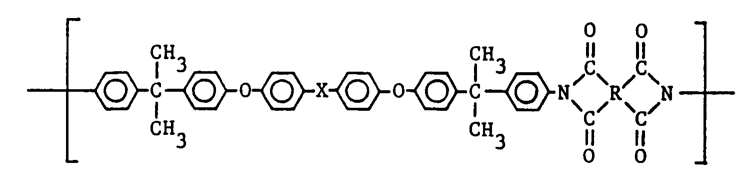
wherein X is a sulfonyl radical or a carbonyl radical and R is a tetra-valent radical selected aliphatic radicals having 2 or more carbon atoms, alicyclic radicals, monocyclic aromatic radicals, fused polycyclic aromatic radicals, and polycyclic aromatic radicals wherein the aromatic rings are linked to one another by a direct bond or via a bridging group. (Japanese Laid-Open Patent Specification No. TOKKAISHO 62-53388 (1987)).

The above polyimide is a thermoplastic polyimide having fluidity at high temperatures in addition to the excellent mechanical, thermal and electrical properties which are usual in polyimide.

In comparison with ordinary engineering polymers represented by polyethylene terephthalate, polybutylene terephthalate, polysulfone and polyphenylene sulfide, the above polyimide is much superior to those polymers in high-temperature resistance and other properties. On the other hand, its processing ability is still inferior to that of those polymers.

Generally in injection molding or extrusion molding, a lower melt viscosity leads to better processing ability. For example, a higher melt viscosity requires higher injection pressure in the molding stage and the molded products are subject to excessive stress, thereby lowering operation efficiency and causing adverse effects on the properties of the molded products. The above stated polyimide can be injection molded because it has an excellent fluidity at high temperatures. The polyimide nevertheless needs to have still better workability.

An object of this invention is to provide a molding resin composition of polyimide which has a very excellent melt flowability without adverse effect on the other desirable properties of the polyimide.

The present inventors have researched extensively in order to achieve the above object, thereby leading to complete the present invention.

The present invention provides a polyimide resin composition comprising, as a first constituent, 99.9 to 50% by weight a of polyimide which consists essentially of recurring units of the formula: 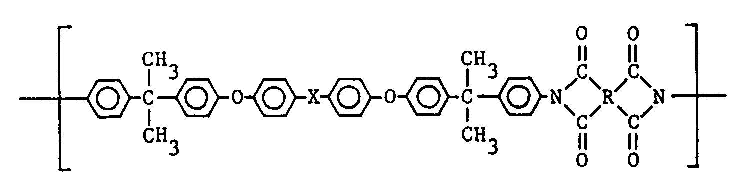
wherein X is a sulfonyl radical or a carbonyl radical and R is a tetra-valent radical selected from aliphatic radicals having 2 or more carbon atoms, alicyclic radicals, monocyclic aromatic radicals, fused polycyclic aromatic radicals, and polycyclic aromatic radicals wherein the aromatic rings are linked to one another by a direct bond or via a bridging group, and, as a second constituent 0.1 to 50% by weight of a high-temperature engineering polymer selected from polyphenylene sulfide, aromatic polysulfones and aromatic polyetherimides different from the polyimide of the first constituent, the percentages being based on the combined weights of the two constituents.

The polyimide used in this invention is derived from an etherdiamine of the following formula: 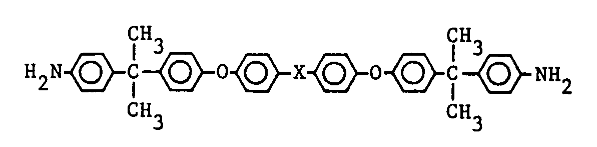
wherein X is a carbonyl or a sulfonyl radical. Such an etherdiamine can be is 4,4′-bis[4-(4-amino-α,α-dimethylbenzyl)phenoxy]benzophenone or bis[4-(4-(4-amino-α,α-dimethylbenzyl)phenoxy)phenyl] sulfone. The etherdiamine is reacted with at least one tetracarboxylic acid dianhydride in an organic solvent. The resulting polyamic acid is imidized to obtain the polyimide.

The tetracarboxylic acid dianhydride used in the above reaction is an anhydride of the formula: 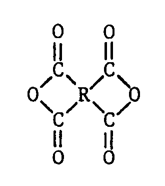
where R is the same as above.

Tetracarboxylic acid dianhydrides that can be used include, for example, ethylenetetracarboxylic dianhydride, butanetetracarboxylic dianhydride, cyclopentanetetracarboxylic dianhydride, pyromellitic dianhydride, 3,3′,4,4′-benzophenonetetracarboxylic dianhydride, 2,2′,3,3′-benzophenonetetracarboxylic dianhydride, 3,3′,4,4′-biphenyltetracarboxylic dianhydride, 2,2′,3,3′-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl) ether dianhydride, bis(3,4-dicarboxyphenyl) sulfone dianhydride, 1,1-bis-(2,3-dicarboxyphenyl)ethane dianhydride, bis(2,3-dicarboxyphenyl)methane dianhydride, bis(3,4-dicarboxyphenyl)methane dianhydride, 4,4′-(p-phenylenedioxy)diphthalic dianhydride, 4,4′-(m-phenylenedioxy)diphthalic dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 1,2,3,4-benzenetetracarboxylic dianhydride, 3,4,9,10-perylenetetracarboxylic dianhydride, 2,3,6,7-anthracenetetracarboxylic dianhydride and 1,2,7,8-phenanthrenetetracarboxylic dianhydride.

Particularly preferred tetracarboxylic acid dianhydrides are pyromellitic dianhydride, 3,3′,4,4′-biphenyltetracarboxylic dianhydride, 3,3′,4,4′-benzophenonetetracarboxylic dianhydride and 4,4′-(p-phenylenedioxy)diphthalic dianhydride.

These tetracarboxylic acid dianhydrides can be used alone or in mixtures of two or more.

The polyimide which is used in the composition of this invention is prepared from the above stated etherdiamine as a starting material. Other diamines can also be used in combination with the above etherdiamine within a range which has no adverse effect on the good properties of the polyimide.

Examples of other diamines which may be used in admixture with the above etherdiamine include, m-phenylenediamine, o-phenylenediamine, p-phenylenediamine, m-aminobenzylamine, p-aminobenzylamine, bis(3-aminophenyl) ether, (3-aminophenyl) (4-aminophenyl) ether, bis(4-aminophenyl) ether, bis(3-aminophenyl) sulfide, (3-aminophenyl) (4-aminophenyl) sulfide, bis(4-aminophenyl) sulfide, bis(3-aminophenyl) sulfoxide, (3-aminophenyl) (4-aminophenyl) sulfoxide, bis(4-aminophenyl) sulfoxide, bis(3-aminophenyl) sulfone, (3-aminophenyl) (4-aminophenyl) sulfone, bis(4-aminophenyl) sulfone, 3,3′-diaminobenzophenone, 3,4′-diaminobenzophenone, 4,4′-diaminobenzophenone, bis[4-(3-aminophenoxy)phenyl]methane, bis[4-(4-aminophenoxy)phenyl]methane, 1,1-bis[4-(3-aminophenoxy)phenyl]ethane, 1,1-bis[4-(4-aminophenoxy)phenyl]ethane, 1,2-bis[4-(3-aminophenoxy)phenyl]ethane, 1,2-bis[4-(4-aminophenoxy)phenyl]ethane, 2,2-bis[4-(3-aminophenoxy)phenyl]propane, 2,2-bis[4-(4-aminophenoxy)phenyl]propane, 2,2-bis[4-(3-aminophenoxy)phenyl]butane, 2,2-bis[4-(4-aminophenoxy)phenyl]butane, 2,2-bis[4-(3-aminophenoxy)phenyl]-1,1,1,3,3,3-hexafluoropropane, 2,2-bis[4-(4-aminophenoxy)phenyl-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4′-bis(3-aminophenoxy)biphenyl, 4,4′-bis(4-aminophenoxy)biphenyl, bis[4-(3-aminophenoxy)phenyl] ketone, bis[4-(4-aminophenoxy)phenyl] ketone, bis[4-(3-aminophenoxy)phenyl] sulfide, bis[4-(4-aminophenoxy)phenyl] sulfide, bis[4-(3-aminophenoxy)phenyl] sulfoxide, bis[4-(4-aminophenoxy)phenyl] sulfoxide, bis[4-(3-aminophenoxy)phenyl] sulfone, bis[4-(4-aminophenoxy)phenyl] sulfone, bis[4-(3-aminophenoxy)phenyl] ether, bis[4-(4-aminophenoxy)phenyl] ether, 1,4-bis[4-(3-aminophenoxy)benzoyl]benzene and 1,3-bis[4-(3-aminophenoxy)benzoyl]benzene.

The high temperature engineering polymers used in the present invention include polyphenylene sulfide, aromatic polysulfones and aromatic polyetherimides.

Polyphenylene sulfide is a resin consisting of recurring units of the formula: 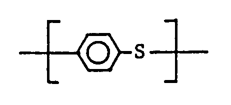
The preparation process of the resin is disclosed, for example, in U.S. Pat. 3,354,129 and Japanese Patent Publication TOKKOSHO 45-3368 (1970). The resin is commercially available, for example, as RYTON (Trade Mark of Phillips Petroleum Co. in U.S.A.). According to the patent disclosure, polyphenylene sulfide is produced by reacting p-chlorobenzene with sodium sulfide monohydrate at 160-250°C under pressure in N-methylpyrrolidone solvent. Polyphenylene sulfide occurs in various grades such as from non-crosslinked to partially crosslinked polymers and polymers having different polymerization degrees. These different grades can be easily produced by conducting a post-treatment process and are also available on the market. Therefore grades having suitable melt viscosity for the desired polymer blend can either be prepared in house or purchased on the market.

Aromatic polysulfones are well known high temperature engineering polymers having a polymer chain represented by the formula: 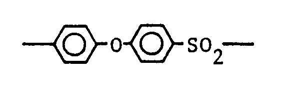
and described, for example, by V.J. Leslie at al, in CHEMITECH, July 1975, 426-432.

Representative examples of recurring units to be found in aromatic polysulfones include: 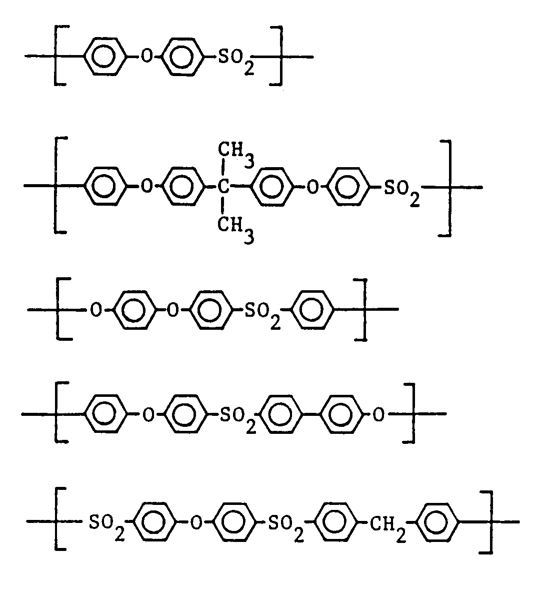 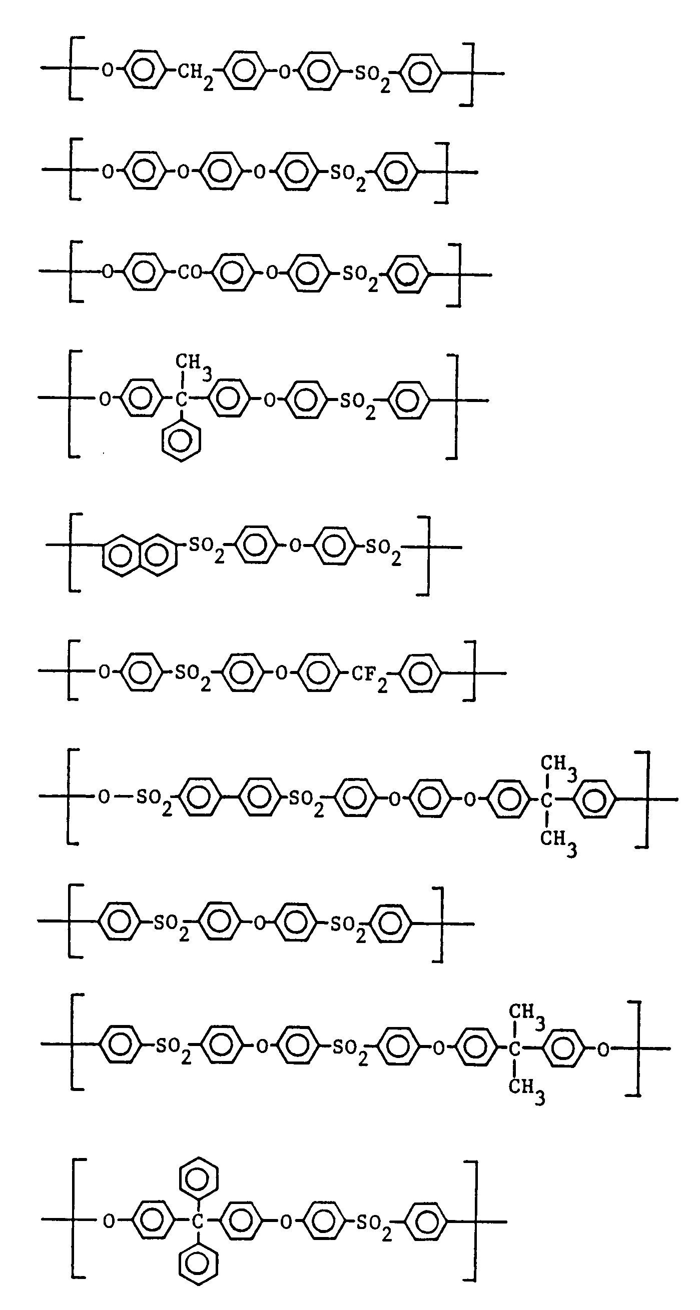
Particularly typical aromatic polysulfones include, for example, the polysulfone consisting of recurring units represented by the formula: 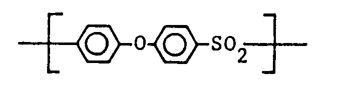
(Trade Mark; VICTREX PES, commercially available from Imperial Chemical Industries in Britain) and the polysulfone consisting of recurring units represented by the formula: 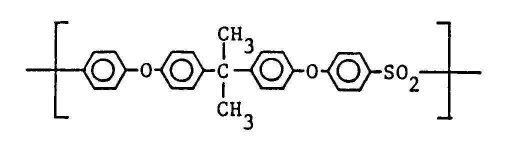
(Trade Mark; UDEL POLYSULFONE, commercially available from Union Carbide Corp. in U.S.A.).

Grades of aromatic polysulfone having various polymerization degrees can be easily produced. Therefore a grade having a suitable melt viscosity for a desired polymer blend can be optionally selected.

Aromatic polyetherimides are polymers having both ether and imide linkages as required bonding units and substantially composed of recurring units of the following formula: 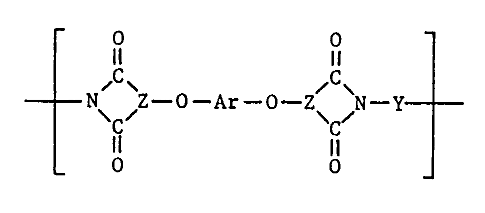
wherein Z is a trivalent aromatic radical where two valencies out of three are connected with two adjacent carbon atoms, Y is a divalent monocyclic aromatic radical or a divalent polycyclic aromatic radical with the rings connected by a bridging group and Ar is a divalent polycyclic aromatic radical with the rings connected by a bridging group or a direct bond.

These polyetherimides are also well known high temperature engineering polymers and are described, for example, by Takekoshi et al. in Polymer Preprint 24,(2),312-313 (1983).

Suitable examples of recurring units constituting aromatic polyetherimides that can be used this invention include: 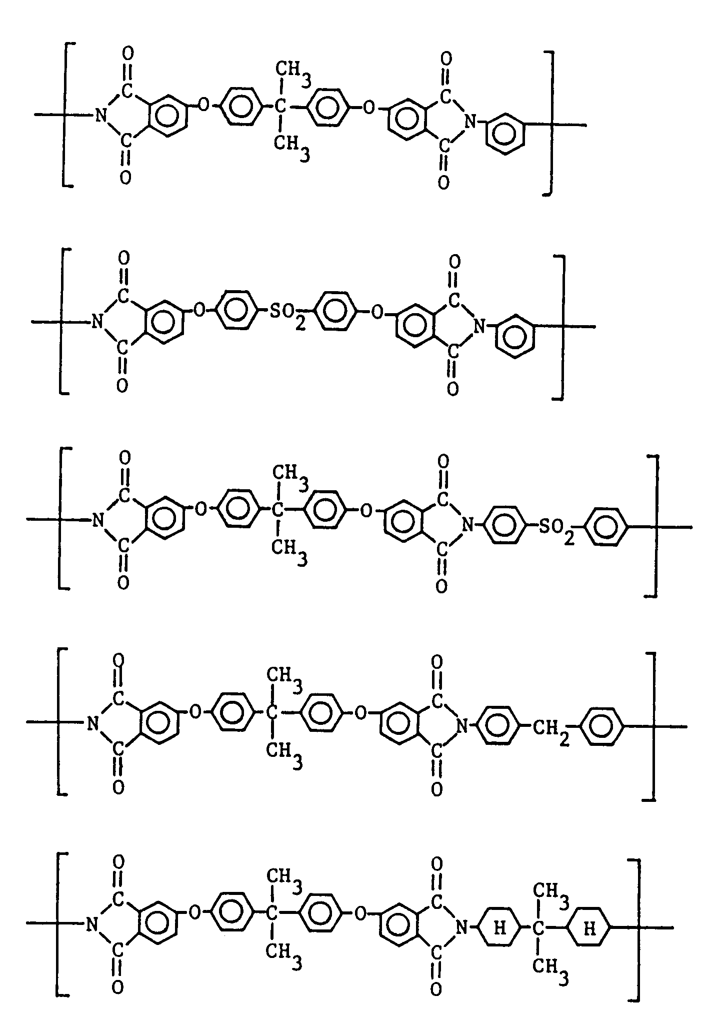 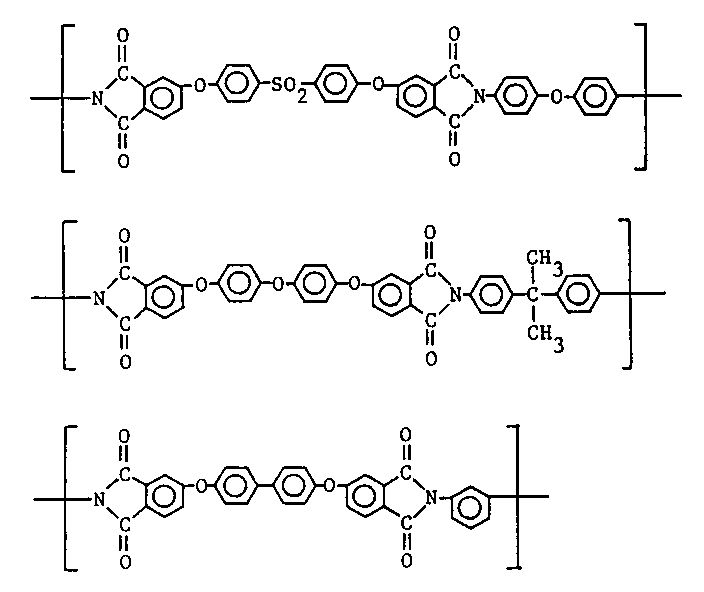
Aromatic polyetherimides are commercially available from General Electric Co. in U.S.A. under the Trade Marks ULTEM-1000, ULTEM-4000 and ULTEM-6000.

The particular aromatic polyetherimide consisting of recurring units of the formula: 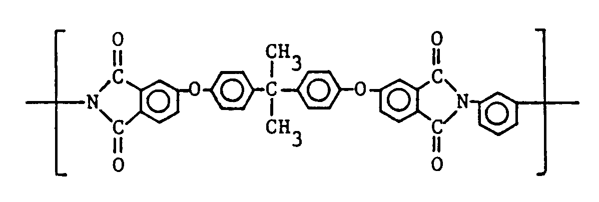
is commercially available from General Electric Co. under the Trade Mark ULTEM-1000.

Grades of aromatic polyetherimide having various polymerization degrees can be easily produced. Therefore a grade having a suitable melt viscosity for a desired polymer blend can be optionally selected.

The molding composition of this invention is prepared so as to consist of the above mentioned polyimide in the range of 99.9 to 50% by weight and the high-temperature engineering polymer in the range of 0.1 to 50% by weight.

The resin composition of this invention based on polyimide/polyphenylene sulfide exhibits remarkably low melt viscosity in a high temperature region above 320°C. The good fluidization effect of polyphenylene sulfide can be found even in small amount. The lower limit of the amount in the composition is 0.1% by weight. The preferred amount is not less than 0.5% by weight.

Polyphenylene sulfide has excellent chemical resistance, water absorption and flame retardance among the high-temperature stable polymers. It is, however, inferior particularly in elongation at break and impact resistance. Therefore too much polyphenylene sulfide in the composition is undesirable because the essential mechanical strength of the polyimide cannot be maintained. The amount of polyphenylene sulfide in the composition thus has an upper limit and is 50% by weight or less.

The resin composition of this invention based on polyimide/aromatic polysulfone also exhibits remarkably low melt viscosity in a high temperature region such as above 330°C. The good fluidization effect of aromatic polysulfone can be found even in small amount. The lower limit of the amount in the composition is 0.1% by weight. The preferred amount is not less than 0.5% by weight.

Aromatic polysulfone has excellent mechanical strength at high temperatures among the high-temperature stable polymers. It is, however, inferior to polyimide in mechanical strength, and izod impact strength in particular. Therefore, too much aromatic polysulfone in the composition is undesirable because the essential mechanical strength of the polyimide cannot be maintained. The amount of aromatic polysulfone in the composition thus has an upper limit and is 50% by weight or less.

The resin composition of this invention based on polyimide/aromatic polyetherimide likewise exhibits remarkably low melt viscosity, as compared with polyimide alone, in a high temperature region, above 350°C in particular. The effect can be found even with a small amount of aromatic polyetherimide. The lower limit of the amount in the composition is 0.1% by weight. The preferred amount is not less than 0.5% by weight.

Aromatic polyetherimide has excellent mechanical strength at high temperatures among the high-temperature stable polymers. It is, however, inferior to polyimide in mechanical strength, and izod impact strength in particular. Therefore, too much aromatic polyetherimide is undesirable because the essential mechanical strength of the polyimide cannot be maintained.

Aromatic polyetherimide is easily soluble in halogenated hydrocarbons such as methylene chloride and chloroform, as well as amide type solvents such as dimethyl acetamide and N-methylpyrrolidone. Therefore too much aromatic polyetherimide in the composition is also undesirable because the essential solvent resistance of the polyimide cannot be maintained.

For these reasons, the amount of aromatic polyetherimide has an upper limit in the composition and is 50% by weight or less.

In the preparation of the composition of this invention, the common methods known can be employed and, for example, the below described methods are preferred.
(1) Polyimide powder and high-temperature engineering polymer powder are pre-mixed to prepare a uniform mixture of powder by using a blender such as a mortar, Henshel mixer, drum blender, tumbler blender, ball mill or ribbon blender.
(2) Polyimide powder is previously dissolved or suspended in an organic solvent. High-temperature engineering polymer is added to the resulting solution or suspension and dispersed uniformly, followed by removing the solvent to give a powdered mixture.
(3) The high-temperature engineering polymer is suspended in an organic solvent solution of the polyamic acid which is the precursor of the polyimide of this invention. The resultant suspension is imidized by heat treatment at 100-400°C or by chemical imidization with a usual imidizing agent, followed by removing the solvent to give a powdered mixture.

The powdered resin composition thus obtained can be used as it is for various molding applications such as injection molding, compression molding, transfer molding and extrusion molding. However, a more preferred method is blending of the fused resin prior to molding.

Fusion blending of polyimide and high-temperature engineering polymer in the forms of respectively powder and powder, pellet and pellet, or powder and pellet is a simple and effective method.

Fusion blending can be carried out by using such fusion blending equipment as is usual for rubber and plastics, for example, hot rolls, Banbury mixer, Brabender and extruder. The fusion temperature is set above the melt temperature of the formulated system and below the temperature at which decomposition begins. The temperature for blending polyimide with polyphenylene sulfide is normally in the range of 300-420°C and preferable 320-400°C. The blending of polyimide with aromatic polysulfone or aromatic polyetherimide is carried out normally in the range of 280-420°C and preferably 300-400°C.

As to the molding methods to be used for the resin composition of this invention, injection and extrusion molding are suitable because these methods form a uniform blend of the fused polymers and have a high productivity. Other processing methods such as transfer molding, compression molding and sinter molding may also be employed.

In addition, the resin composition of this invention may have added to it at least one solid lubricant such as molybdenum disulfide, graphite, boron nitride, lead monoxide or lead powder. The composition may also include at least one reinforcing material, such as glass fiber, carbon fiber, aromatic polyamide fiber, potassium titanate fiber or glass beads.

The resin composition of this invention may further include any of the commonly used additives, within a range which has no adverse effect on the properties desired. Such additives include, for example, antioxidants, heat stabilizers, ultraviolet ray absorbers, flame retardants, auxiliary flame retardants, antistatic agents, lubricants and coloring agents.

### EXAMPLES

The techniques of the present invention will hereinafter be illustrated in more detail by way of synthesis examples, composition examples and comparative examples.

### Synthesis example 1

A reaction vessel equipped with a stirrer, reflux condenser and nitrogen inlet tube was charged with 6.68 kg (10 moles) of bis[4-(4-(4-amino-α,α-dimethylbenzyl)phenoxy)phenyl] sulfone, and 50.0 kg of N,N-dimethylacetamide. The mixture had added to it 2.14 kg (9.8 moles) of pyromellitic dianhydride under a nitrogen atmosphere at room temperature with care taken to avoid temperature rise of the solution and was taken stirred for 20 hours at room temperature.

To the resultant solution, 2.02 kg (20 moles) of triethylamine and 2.55 kg (25 moles) of acetic anhydride were added dropwise under a nitrogen atmosphere at room temperature and the mixture stirred for 20 hours at room temperature to obtain a light yellow slurry. The slurry was filtered, washed with methanol, filtered again and dried at 180°C for 8 hours under reduced pressure to obtain 8.26 kg (about 97.6% yield) of polyimide as light yellow powder. The inherent viscosity of the polyimide powder was 0.83 dl/g. The inherent viscosity was measured at 35°C after dissolving 0.5 g of the polyimide powder in 100 ml of a solvent (a mixture of p-chlorophenol and phenol in a ratio of 90:10 by weight) at elevated temperature and cooling the resulting solution. The glass transition temperature Tg of the polyimide was 280°C in accordance with the DSC method and the 5% weight loss temperature was 545°C in accordance with the DTA-TG method.

### Synthesis examples 2-6

The same procedures as in Synthesis example 1 were carried out except using other various combinations of diamines and tetracarboxylic acid dianhydrides to obtain a variety of polyimide powders. Table 1 gives the synthesis quantities and the inherent viscosities and glass transition temperatures of the polyimides obtained.

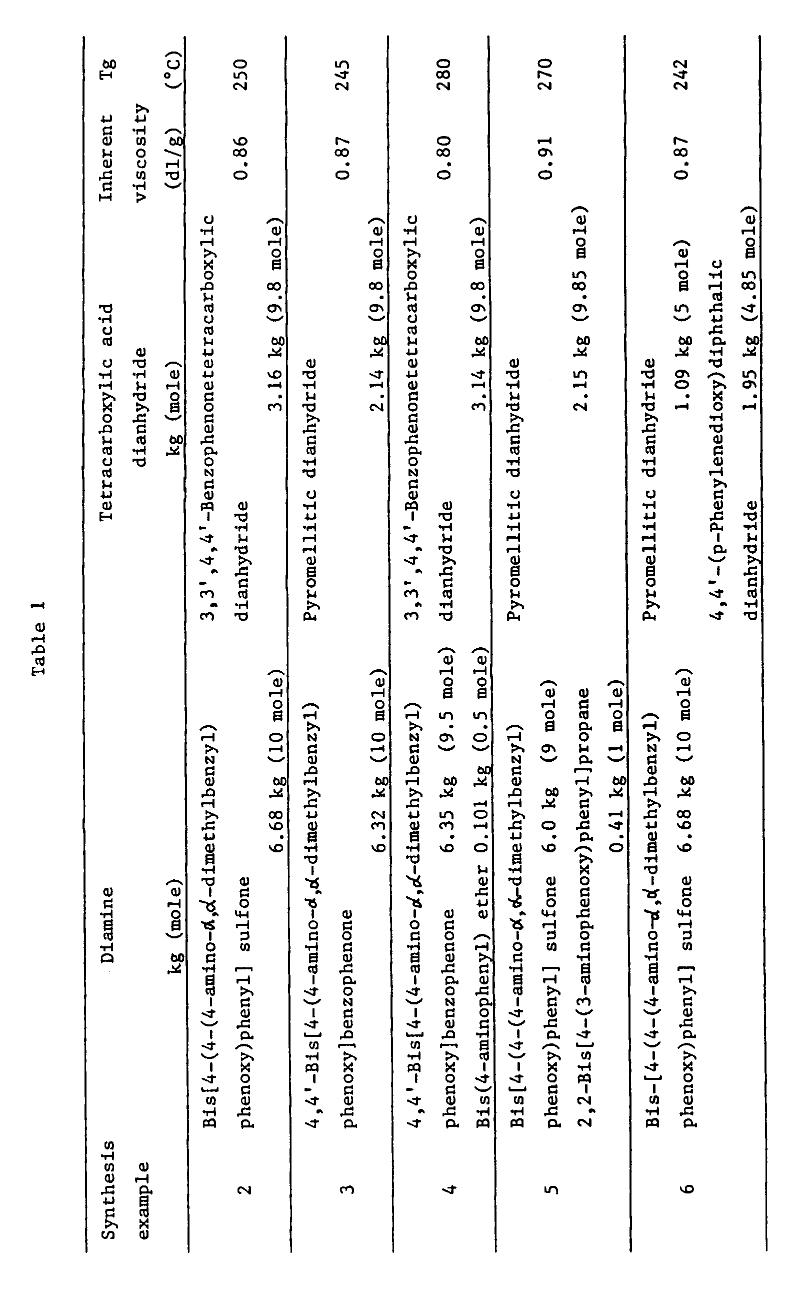

### Composition Examples 1-3

The polyimide powder obtained in Synthesis example 1 was dry blended with commercially available polyphenylene sulfide powder RYTON-P4 (Trade Mark of Phillips Petroleum Co.) in various compositions as given in Table 2 and the blend pelletized by extruding at 300-320°C with a twin screw extruder. The pellets thus obtained were injection molded at an injection temperature of 330-360°C and a mold temperature of 150°C. The physical and thermal properties of the molded products were measured and the results are given in Table 2. In Table 2, tensile strength and elongation at break, flexural strength and flexural modulus, izod impact strength, and heat distortion temperature were respectively measured in accordance with ASTM D-638, D-790, D-256 and D-648.

Table 2 also gives the minimum injection pressure which indicates melt flowability. A lower minimum injection pressure results from a better melt flowability.

### Comparative example 1

The same procedures as in Composition Examples 1-3 were carried out using a composition outside the scope of this invention. The physical and thermal properties were measured and the results are given in Table 2.

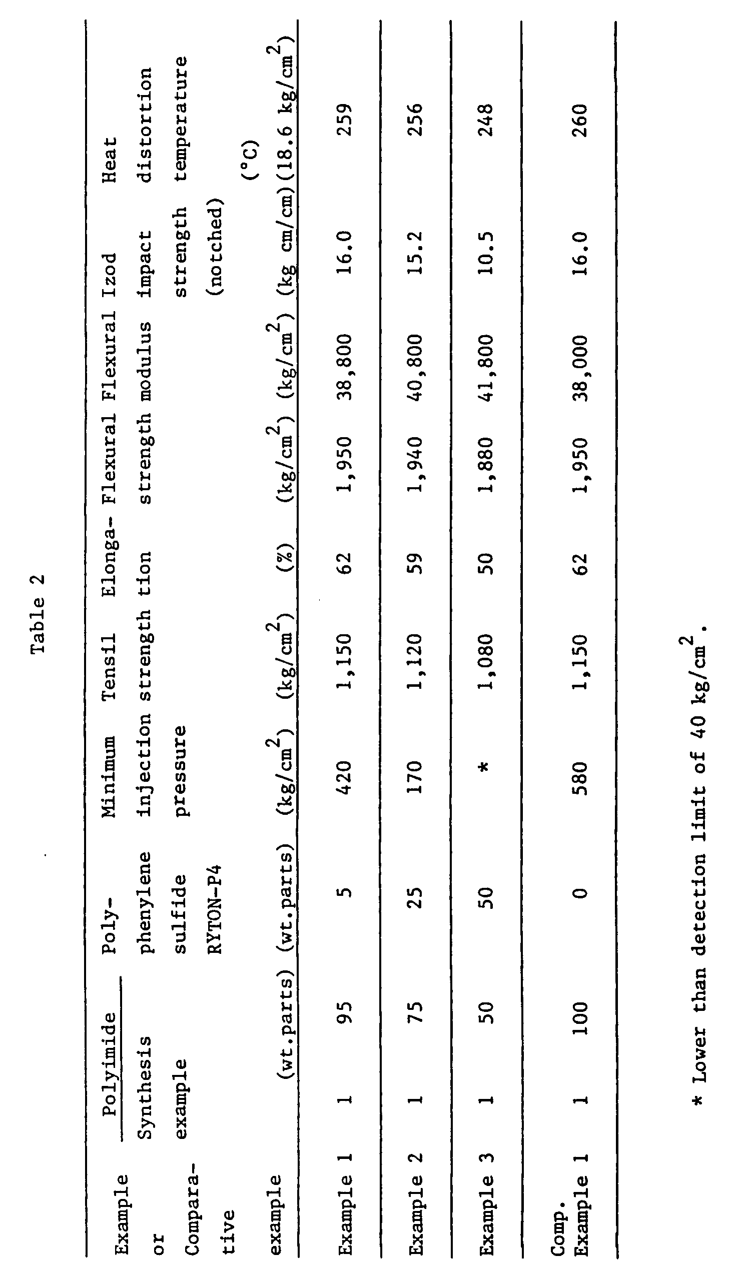

### Composition Examples 4-15 and Comparative examples 2-6

Uniformly formulated pellets were prepared by using the polyimide powders obtained in Synthesis examples 2-6 and the same procedures as in Composition Examples 1-3. The pellets were similarly injection molded. The physical and thermal properties were measured. Tables 3-4 give the results of compositions within the scope of this invention as Examples 4-15 and those outside the scope of this invention as Comparative examples 2-6.

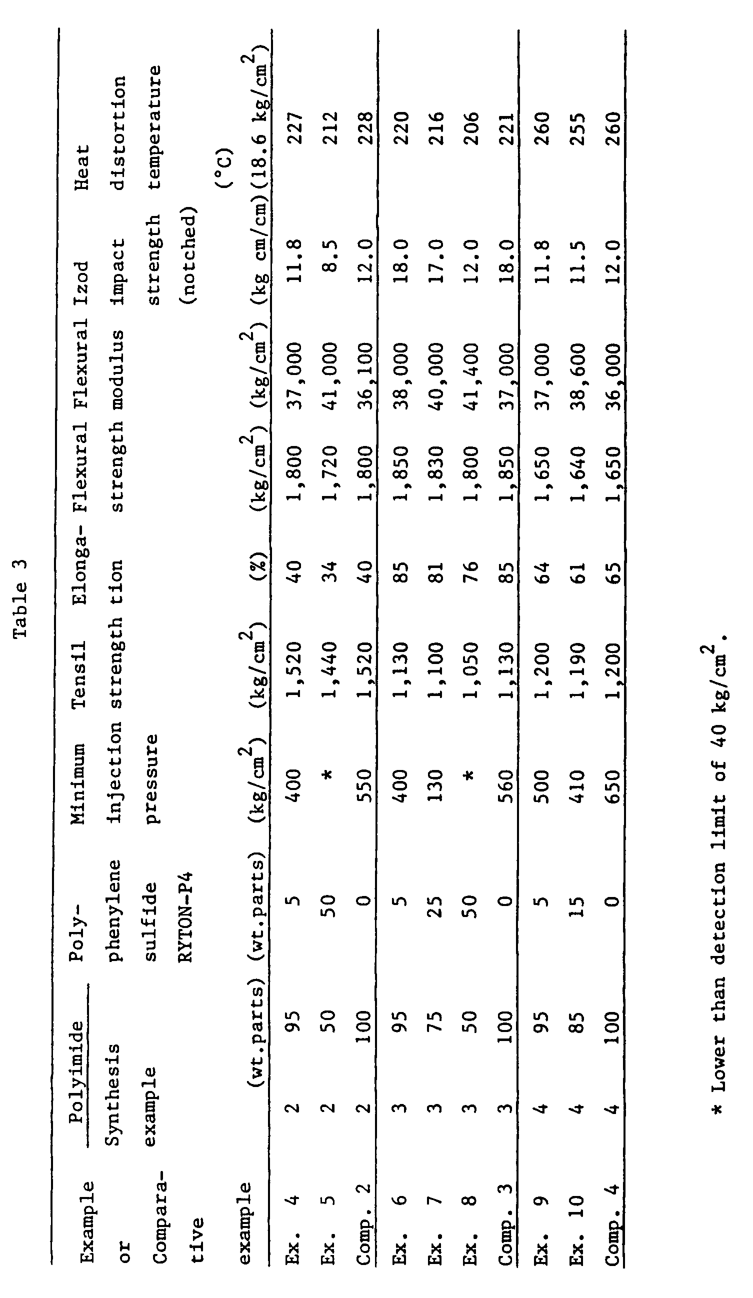

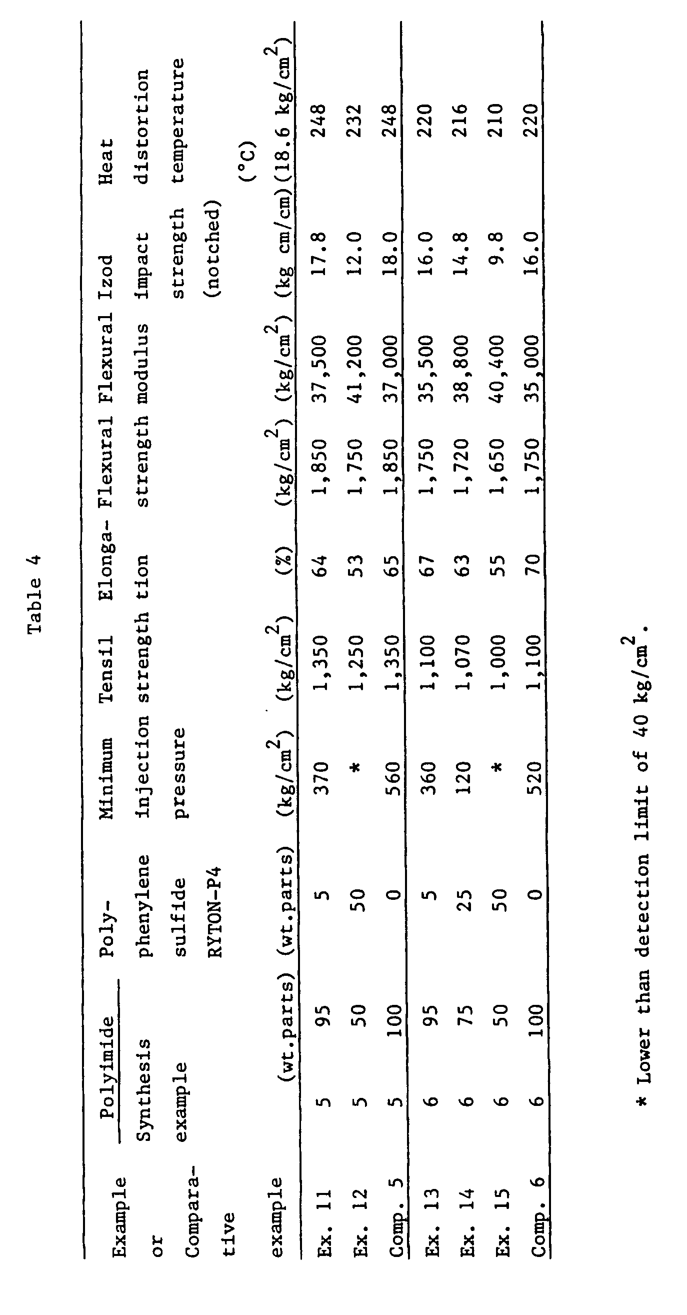

### Composition Examples 16-18

The polyimide powder obtained in Synthesis example 1 was dry blended with commercially available aromatic polysulfone powder VICTREX PES 3600P (Trade Mark of Imperial Chemicals Industries, Ltd.) in various compositions as given in Table 5 and pelletized by extruding at 330-350°C with a twin screw extruder. The pellets thus obtained were injection molded at an injection temperature of 340-380°C and a mold temperature of 150°C. The physical and thermal properties of the molded products were measured and the results are given in Table 5. In Table 5, glass transition temperature Tg was measured in accordance with the TMA penetration method.

### Comparative example 7

The same procedures as in Composition Examples 16-18 were carried out using a composition outside the scope of this invention. The physical and thermal properties were measured and the results are given in Table 5.

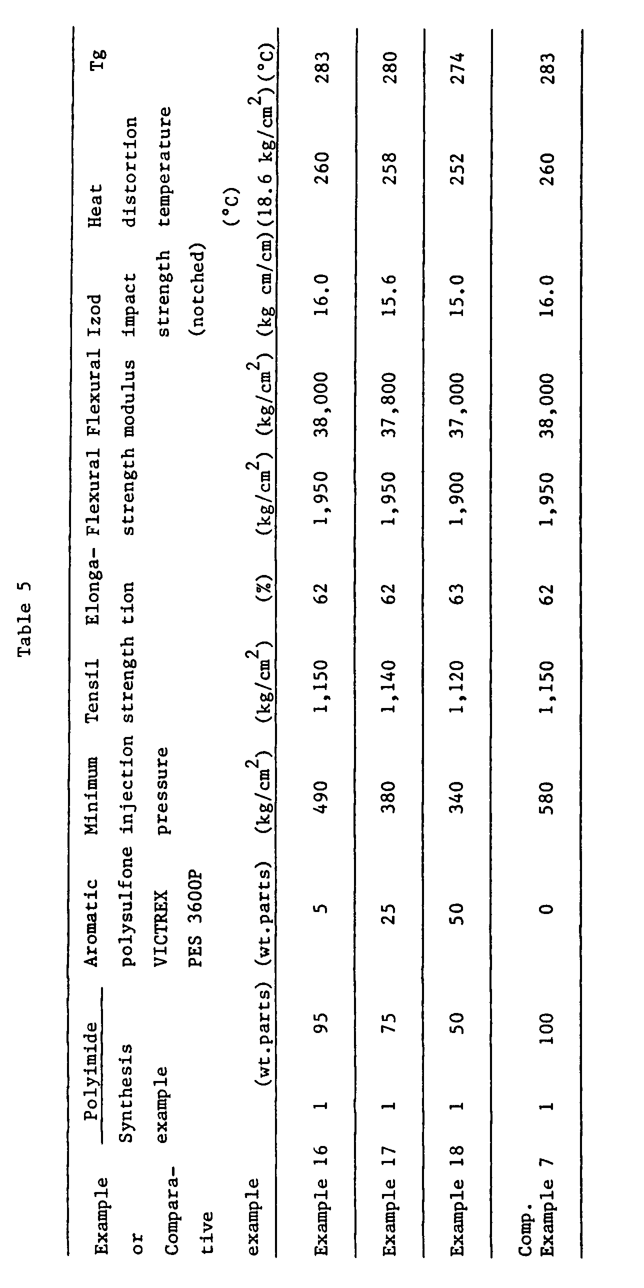

### Examples 19-29 and Comparative examples 8-12

The polyimide powders obtained in Synthesis examples 2-6 were mixed with aromatic polysulfone. Commercially available VICTREX PES 3600P (Trade Mark of Imperial Chemicals Industries Ltd.) and UDEL POLYSULFONE P-1700 (Trade Mark of Union Carbide Corp.) were used as aromatic polysulfones. The resulting mixtures having formulations given in Tables 6-8 were kneaded in a molten state to obtain uniformly blended pellets.

The pellets above obtained were injection molded with the same conditions as in Composition Examples 16-18. The molded products were measured as to their physical and thermal properties. The results obtained are given in Tables 6-8.

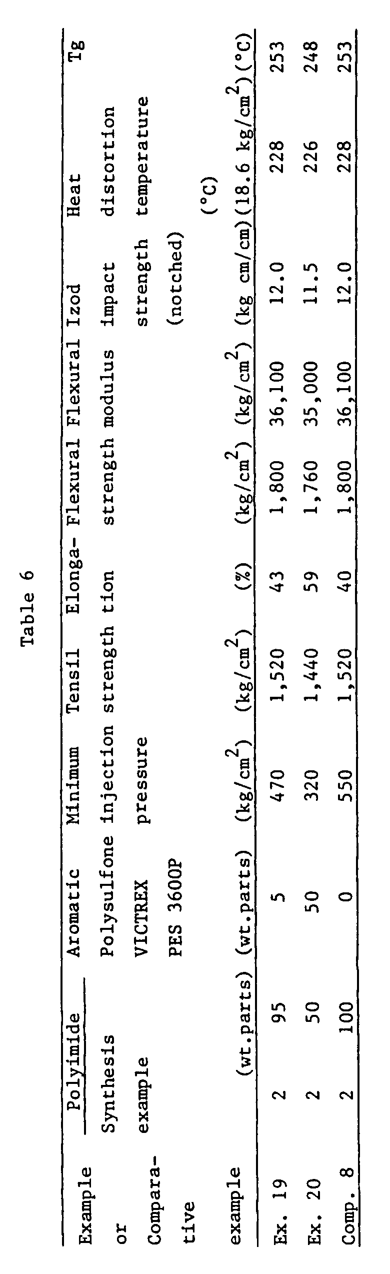

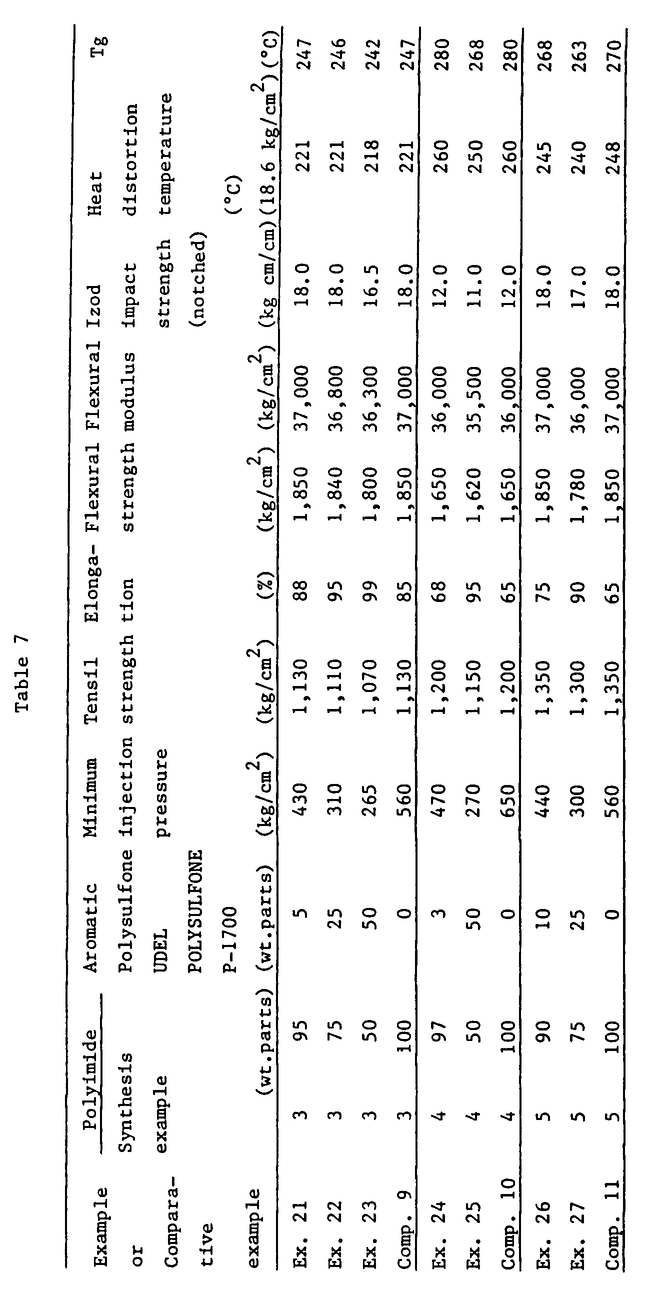

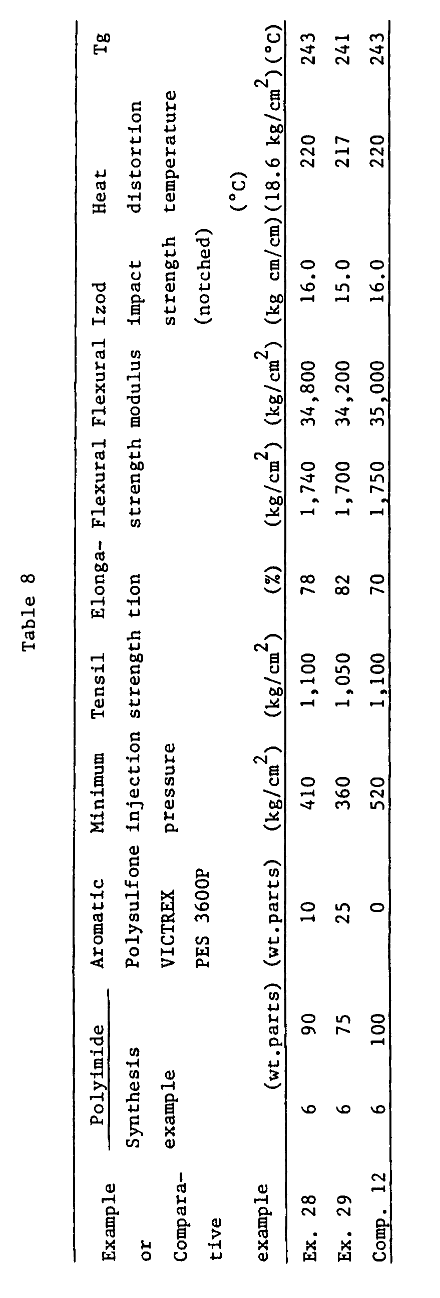

### Composition Examples 30-44

The polyimide powders obtained in Synthesis examples 1-6 were dry blended with commercially available aromatic polyetherimide ULTEM 1000 (Trade Mark of General Electric Co.) in various compositions as given in Tables 9-11 and pelletized by extruding at 330-350°C with a twin screw extruder. The pellets thus obtained were injection molded at an injection temperature of 360-380°C and a mold temperature of 150°C. The physical and thermal properties of the molded products were measured and the results are given in Tables 9-11.

### Comparative examples 13-18

The same procedures as in Composition Examples 30-44 were carried out using compositions outside the scope of this invention. The physical and thermal properties were measured and the results are given in Tables 9-11.

This invention accordingly provides polyimide based resin compositions having excellent processing ability in addition to the usual outstanding properties of polyimide.

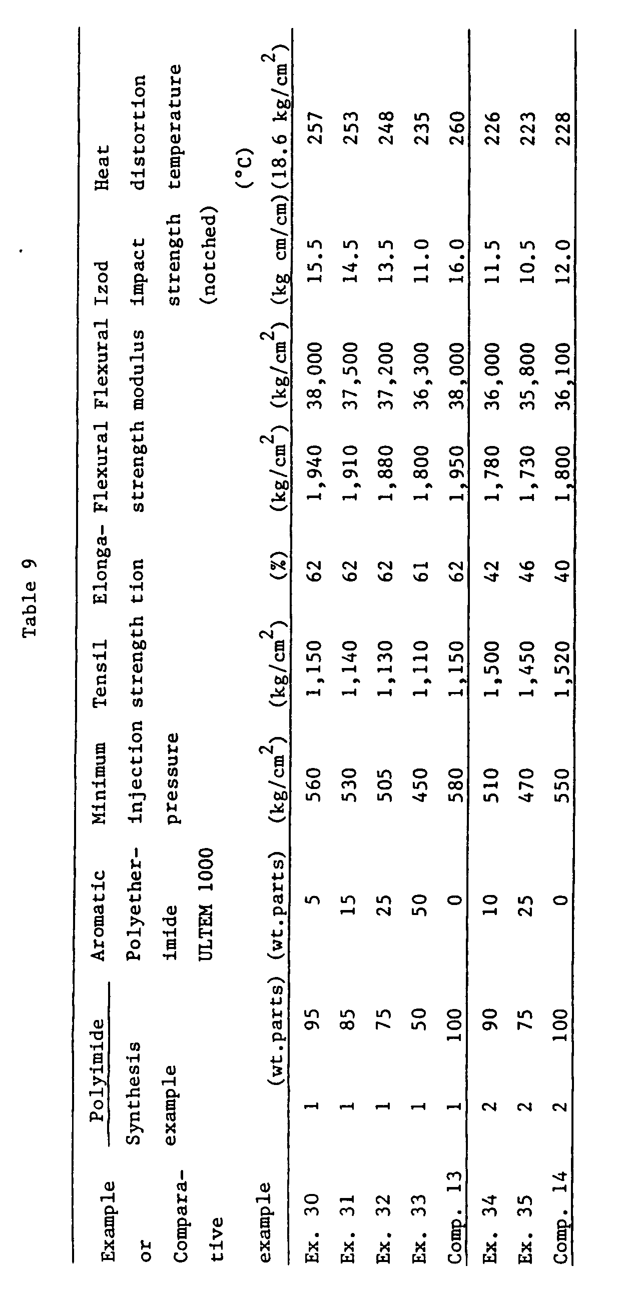

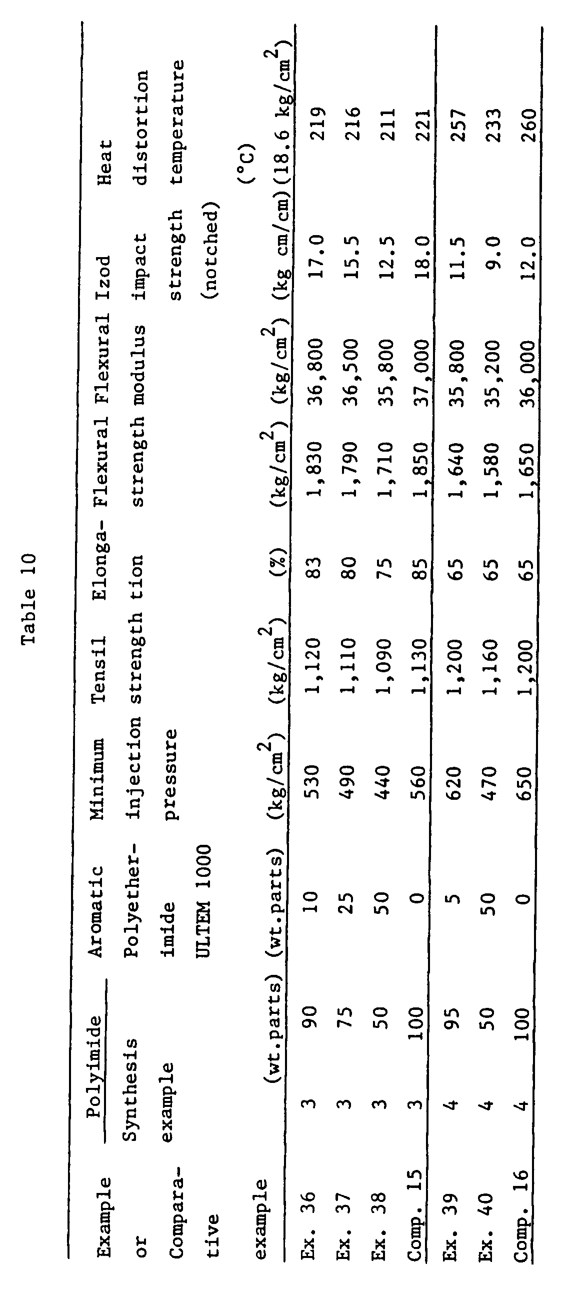

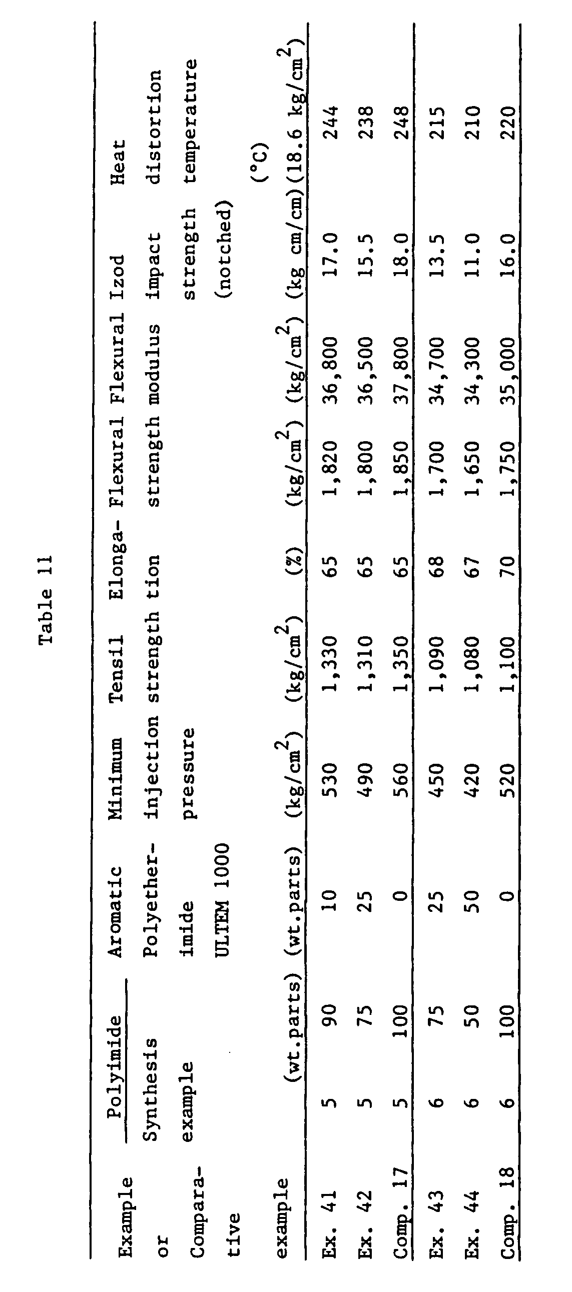

## Claims

1. A polyimide resin composition comprising, as a first constituent, 99.9 to 50% by weight of a polyimide which consists essentially of recurring units of the formula: 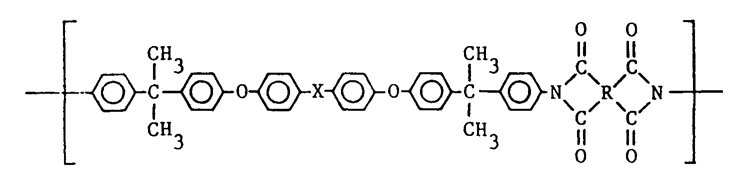 where X is a sulfonyl radical or carbonyl radical and R is a tetra-valent radical selected from aliphatic radicals having 2 or more carbon atoms, alicyclic radicals, monocyclic aromatic radicals, fused polycyclic aromatic radicals, and polycyclic aromatic radicals wherein the aromatic rings are linked to one another by a direct bond or via a bridging group, and, as a second constituent, 0.1 to 50% by weight of a high temperature engineering polymer selected from polyphenylene sulfide, aromatic polysulfones and aromatic polyetherimides different from the polyimide of the first constituent, the percentages being based on the combined weight of the two constituents.

2. The polyimide resin composition as claimed in claim 1, wherein R is a tetravalent radical selected from

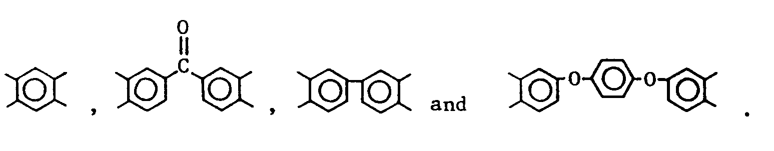

3. The polyimide resin composition as claimed in claim 1, wherein the high temperature engineering polymer is polyphenylene sulfide.

4. The polyimide resin composition as claimed in claim 1, wherein the high temperature engineering polymer is an aromatic polysulfone.

5. The polyimide resin composition as claimed in claim 1, wherein the high temperature engineering polymer is an aromatic polyetherimide different from the polyimide of the first constituent.

## Patentansprüche

1. Zusammensetzung aus Polyimidharz, die als erstem Bestandteil aus 99,9-50 Gewichtprozent eines im wesentlichen aus rekurrenten Einheiten bestehenden Polyimides mit der Formel: 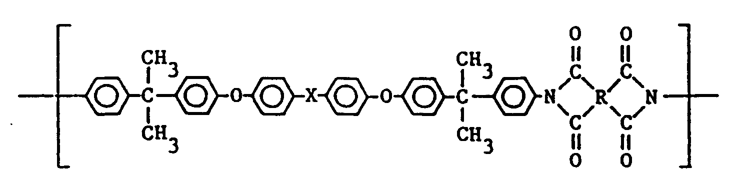 besteht, wobei X ein Sulfonyl-Radikal oder Carbonyl-Radikal und R ein vierwertiges Radikal ist, das aus aliphatischen Radikalen mit 2 oder mehr Kohlenstoffatomen, alizyklischen Radikalen, monozyklischen aromatischen Radikalen, kondensierten, polyzyklischen aromatischen Radikalen und polyzyklischen aromatischen Radikalen ausgewählt wird, wobei die Benzolringe direkt oder über eine Brückengruppe miteinander verbunden sind, und aus 0,1-50 Gewichtprozent eines technischen Hochtemperaturpolymers als zweitem Bestandteil, der aus Polyphenylensulfid, aromatischen Polysulfonen und aromatischen Polyetherimiden ausgewählt wird, dadurch abweichend vom Polyetherimid des ersten Bestandteils, daß die Prozentzahlen auf dem Gesamtgewicht der zwei Bestandteile beruhen.

2. Die Zusammensetzung aus Polyimidharz nach Anspruch 1, wobei R ein vierwertiges Radikal ist, das aus 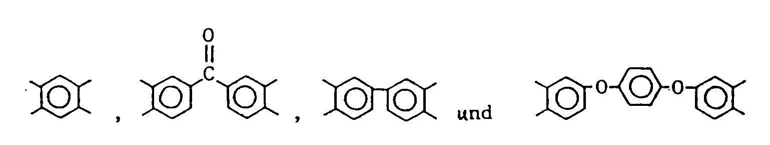 ausgewählt wird.

3. Die Zusammensetzung aus Polyimidharz nach Anspruch 1, wobei das technische Hochtemperaturpolymer ein Polyphenylensulfid ist.

4. Die Zusammensetzung aus Polyimidharz nach Anspruch 1, wobei das technische Hochtemperaturpolymer ein aromatisches Polysulfon ist.

5. Die Zusammensetzung aus Polyimidharz nach Anspruch 1, wobei das technische Hochtemperaturpolymer ein vom ersten Bestandteil abweichendes aromatisches Polyetherimid ist.

## Revendications

1. Une composition de résine polyimide comprenant, en premier composant, de 99,9 à 50 % en poids d'un polyimide constitué essentiellement de motifs récurrents de la formule suivante : 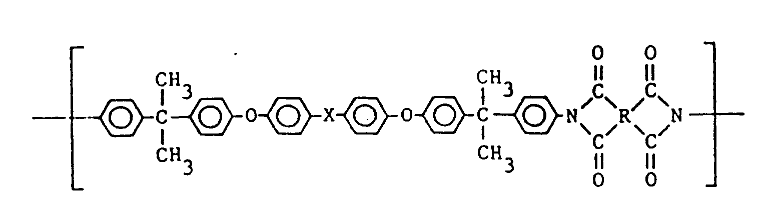 où X est un radical sulfonyle ou un radical carbonyle et R est un radical tétravalent sélectionné parmi les radicaux aliphatiques ayant au moins deux atomes de carbone, les radicaux alicycliques, les radicaux aromatiques monocycliques, les radicaux aromatiques polycycliques condensés, et les noyaux aromatiques dans lesquels les composés cycliques aromatiques sont liés les uns aux autres par une liaison directe ou par un groupe de pontge, et, en deuxième composant, de 0,1 à 50 % en poids d'un polymère technique à haute température sélectionné parmi le polyphénylène sulfide, les polysulfones aromatiques et les polyéthérimides aromatiques différents du polyimide du premier composant, les pourcentages étant fonction du poids combiné des deux composants.

2. La composition de résine polyimide selon la revendication 1, dans laquelle R est un radical tétravalent sélectionné parmi

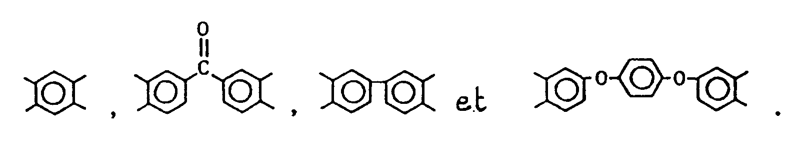

3. La composition de résine polyimide selon la revendication 1, dans laquelle le polymère technique à haute température est du polyphénylène sulfide.

4. La composition de résine polyimide selon la revendication 1, dans laquelle le polymère technique à haute température est un polysulfone aromatique.

5. La composition de résine polyimide selon la revendication 1, dans laquelle le polymère technique à haute température est un polyéthérimide aromatique différent du polyimide du premier composant.
